# EUROPEAN PATENT SPECIFICATION

(11) **EP 1 865 017 B1**
(45) Date of publication and mention of the grant of the patent: **12.01.2011**
(21) Application number: 07251977.0
(22) Date of filing: 14.05.2007
(51) Int. Cl.: C08J 7/12

(54) **Surface fluorination of plastics materials**
Oberflächenfluorierung von Kunststoffmaterialien
Fluoration en surface des matériaux plastiques

(30) Priority: 18.05.2006 EP 06252585
(43) Date of publication of application: 12.12.2007
(73) Proprietor: Air Products and Chemicals, Inc., Allentown, PA 18195-1501 (US)
(72) Inventor: Taege, Reiner Reinhard Wilhelm, 42579 Heiligenhaus (DE); Ferrier, Gordon George, Caversham Park Village Berkshire RG4 6RE (GB); Kharitonov, Alexandr Pavlovich, Moscow Region 142432 (RU)
(74) Representative: Stones, James Alexander

(56) References cited:
- EP-A- 1 614 709

## Description

The present invention relates to the use of at least one antioxidant as an embrittlement inhibitor for surface fluorinated plastics materials.

It is known that the solvent barrier properties of a membrane made from a plastics material may be improved if the membrane is surface fluorinated. However, surface fluorination causes the formation of free radicals which react readily with molecular oxygen to produce oxidation products such as hydroperoxides and alcohols. These oxidation products impair the solvent barrier performance of the membranes by increasing the hydrophilicity and, hence, the wettability, of the surface fluorinated plastics material.

EP-A-1609815 (Taege et al; published 28th December 2005) discloses the use of stabilizers, particularly triethylamine to inhibit impairment of the solvent barrier properties of surface fluorinated plastics materials due to the formation and reaction of free radicals. The stabilizers act by either scavenging polymer bonded carbon centred or oxygen centred free radicals or by deactivating, decomposing or derivatizing the oxidation products. The reference discloses the use of nitric oxide (NO) as a carbon centred radical scavenger. The disclosure of EP-A-1609815 is incorporated herein by reference.

The Inventors observed that surface fluorination of plastics membranes using, for example, molecular fluorine (0.5 vol. %) in air (99.5 vol. %), impairs the mechanical stability of the plastics membranes. Specifically, the plastics membranes become brittle and lose tensile strength. Such embrittlement is serious as it significantly reduces the usefulness of the plastics membranes, particularly if the membranes are to be used as filter membranes.

The Inventors have unexpectedly discovered that the use of antioxidants such as NOₓ or SOₓ inhibits embrittlement of surface fluorinated plastics materials. "NOₓ" is a short hand notation for the oxides of nitrogen and covers nitric oxide (NO); dinitrogen dioxide (N₂O₂); nitrogen dioxide (NO₂); dinitrogen trioxide (N₂O₃); and dinitrogen tetroxide (N₂O₄). "SOₓ" is a short hand notation for the oxides of sulfur and covers sulfur dioxide (SO₂); and sulfur trioxide (SO₃).

Esnouf et al (J. Polym. Science, Polym. Chem; 2003; vol. 41; pp 1509-1517) discloses the use of NO to derivatize oxidation products produced on irradiated fluoropolymers to facilitate spectroscopic identification and quantification of the oxidation products. In addition, SO₂ has been used to derivatize hydroperoxides produced on other plastics materials such as polyethylene to facilitate quantitative analysis thereof (see, for example, Carlson et al (Poly. Degrad. Stab.; 1991; vol. 32; pp 377)).

The Inventors are not aware, however, of any prior art that discloses the use of any antioxidants, particularly NOₓ or SOₓ, to inhibit embrittlement of surface fluorinated plastics materials.

Accordingly, there is provided in a first aspect of the present invention, use of at least one antioxidant selected from the group consisting of NOₓ; SOₓ; nitric oxide (NO); dinitrogen dioxide (N₂O₂); nitrogen dioxide (NO₂); dinitrogen trioxide (N₂O₃); dinitrogen tetroxide (N₂O₄); sulfur dioxide (SO₂); and sulfur trioxide (SO₃), as an embrittlement inhibitor for surface fluorinated plastics materials.

According to a second aspect of the present invention, there is provided a process for producing embrittlement inhibited surface fluorinated plastics materials, said process comprising:
surface fluorinating at least a portion of the surface of a plastics material to produce a surface fluorinated plastics material;
exposing said surface fluorinated plastics material to an oxidant fluid to produce an oxidised surface fluorinated plastics material; and
exposing said oxidised surface fluorinated plastics material to at least one antioxidant selected from the group consisting of NOₓ; SOₓ; nitric oxide (NO); dinitrogen dioxide (N₂O₂) ; nitrogen dioxide (NO₂); dinitrogen trioxide (N₂O₃) ; dinitrogen tetroxide (N₂O₄) ; sulfur dioxide (SO₂) and sulfur trioxide (SO₃).

Without wishing to be bound by any particular theory, the Inventors believe that reactive species such as oxy-radicals (e.g. peroxy radicals and alkoxy radicals) and oxy-radical derivatives (or oxidation products, e.g. hydroperoxides, alcohols, ketones, aldehydes, carbonic acid and carbonic acid derivatives) are formed as a result of surface fluorination of the plastics material. These reactive species react, either with other reactive species or, more likely, with the polymers of the plastics material, to form cross-links within the polymer matrix. As a result of the formation of cross-links, the plastics material becomes brittle and loses tensile strength. The antioxidants are currently thought to decompose, deactivate or derivatize the reactive species before they can react to form cross-links, thereby inhibiting embrittlement of the plastics material.

The or each antioxidant may be an oxy-radical scavenger. "Oxy-radical scavengers" are compounds that decompose, deactivate or derivatize peroxy and alkoxy radicals.

The or each antioxidant may be a scavenger of oxy-radical derivatives. Such scavengers are compounds that decompose, deactivate or derivatize hydroperoxides, alcohols, ketones, aldehydes, carbonic acid and carbonic acid derivatives.

Chemically stable mixtures of two or more antioxidants may be used but, preferably, antioxidants are used individually.

The or each antioxidant usually has high volatility and/or high mobility. In this connection, the or each antioxidant is preferably gaseous at about 20°C and about 100 kPa. Additionally or alternatively, the or each antioxidant usually has a molecular weight of no more than about 150 g/mol and preferably no more than about 100 g/mol.

The or each antioxidant is selected from the group consisting of NOₓ; SOₓ; nitric oxide (NO); dinitrogen dioxide (N₂O₂); nitrogen dioxide (NO₂); dinitrogen trioxide (N₂O₃); dinitrogen tetroxide (N₂O₄); sulfur dioxide (SO₂); and sulfur trioxide (SO₃).

The antioxidant is preferably either NOₓ or SOₓ. For example, the antioxidant preferably comprises NO or SO₂, with NO being particularly preferred. In this connection, technical grade NO is well known to be contaminated with small amounts of NO₂. Therefore, mixtures of NO and NO₂ may be used as the antioxidant.

The or each antioxidant is preferably used in a process comprising:
surface fluorinating at least a portion of the surface of a plastics material to produce a surface fluorinated plastics material;
exposing said surface fluorinated plastics material to an oxidant fluid to produce an oxidised surface fluorinated plastics material; and
exposing said oxidised surface fluorinated plastics material to the antioxidant(s).

By "oxidized surface fluorinated plastics material", the Inventors mean a surface fluorinated plastics material in which the polymer bonded radicals have been exposed to molecular oxygen to form peroxy and alkoxy radicals, at least a portion of which may have been converted to oxidation products, for example, those oxidation products listed above.

One advantage of preferred embodiments of the present process is that the surface fluorination step can be achieved using any of the known surface fluorination techniques including fluorination using molecular fluorine gas (either alone or diluted in an inert carrier fluid); or using a cold plasma of fluorine atoms diluted in an inert carrier fluid. The inert carrier fluid may be any suitable fluid and is usually a gas such as nitrogen, argon, helium, carbon dioxide or sulfur hexafluoride.

Surface fluorination may be carried out either "in-line" or "off-line". The off-line fluorination process may be carried out in a closed reaction chamber using common technical fluorine inert gas mixtures. The fluorine blend typically comprises from about 10 vol % to about 20 vol % molecular fluorine and from about 90 vol % to about 80 vol % inert gas, e.g. molecular nitrogen. A typical partial pressure for molecular fluorine during the off-line fluorine treatment is from about 1 kPa to about 8 kPa. Fluorination may be carried out at from about 40°C to about 80°C over from about 0.5 h to about 2.5 h.

In-line fluorination may be carried out during blow moulding of a plastic article. The processes typically employ molecular fluorine/inert gas blends (in particular, molecular fluorine/nitrogen blends) which comprise from about 1 vol % to about 3 vol % molecular fluorine and from about 99 vol % to about 97 vol % inert gas, e.g. molecular nitrogen. The fluorinating gas is typically applied to the substrate surface at temperature of from about 80°C to about 190°C at absolute gas pressures typically ranging from about 0.4 MPa to about 0.8 MPa. The typical treatment duration is from 1 min to 4 min.

In preferred embodiments, the surface fluorinated plastics material or the oxidized surface fluorinated plastics material is exposed to the antioxidant(s) after no more than 60 minutes following termination of surface fluorination. Preferably, no more than 30 minutes elapse after termination of the surface fluorination step before exposure to the antioxidant(s) and, more preferably, this period is less than about 10 minutes.

The plastics material may be surface fluorinated and exposed to the oxidant fluid in the same step. Thus, the plastics material may be exposed to a gaseous fluid mixture comprising molecular fluorine and an oxidant gas to produce said oxidized surface fluorinated plastics material. For example, the surface fluorination may be carried out using as gaseous mixture comprising molecular fluorine and molecular oxygen, e.g. F₂ in air.

Alternatively, the plastics material may be surface fluorinated and then exposed to the oxidant gas in a subsequent step. Thus, the plastics material may be exposed to a gaseous fluid comprising molecular fluorine in an inert carrier gas to produce said surface fluorinated plastics material which is subsequently exposed to an oxidant fluid to produce said oxidised surface fluorinated plastics material.

The oxidant fluid may be a liquid or a vapour but is usually gaseous. In embodiments in which the oxidant fluid is a gas, the oxidant gas may be molecular oxygen; nitrous oxide (N₂O); nitrogen dioxide (NO₂); nitrogen trioxide (N₂O₆) ; or dinitrogen tetroxide (N₂O₄). Molecular oxygen is preferred. The oxidant fluid is usually air.

The oxidized surface fluorinated plastics material may be exposed to the antioxidant(s) in the form of a fluid. The fluid may be a gas, a vapour or a liquid, although gaseous fluids are preferred.

The antioxidant(s) may be used neat (i.e. undiluted) or may be diluted in an inert carrier fluid which is usually a gas. Suitable inert carrier gases include nitrogen, argon, helium, sulfur hexafluoride or carbon dioxide. However, the oxidized surface fluorinated plastics material is preferably exposed to the antioxidant(s) in neat, gaseous form.

In embodiments where the antioxidant(s) is used in gaseous form, the antioxidant(s) usually has a (total) partial pressure of from about 5 kPa to about 1 MPa and, preferably, from about 10 kPa to about 500 kPa. In embodiments involving "high pressure" in-line fluorination processes, the (total) partial pressure of the antioxidant(s) may be from about 200 kPa to about 400 kPa, e.g. about 300 kPa. In embodiments involving "low pressure" off-line fluorination processes, the (total) partial pressure of the antioxidant(s) may be from 5 kPa to about 50 kPa, preferably from about 10 kPa to about 30 kPa, e.g. about 20 kPa.

The oxidised surface fluorinated plastics material is preferably exposed to the antioxidant(s) for sufficient time for at least substantially all and preferably all of the oxy-radicals and oxy-radical derivatives to be scavenged.
In practice, the exposure time is usually from 5 min to about 60 min depending on the size of the plastics material being treated. The exposure time is usually less than about 30 min. In embodiments involving "low pressure" off-line fluorination, the exposure time is usually from about 2 min to about 20 min, preferably from about 5 min to about 20 min, e.g. about 10 min. In embodiments involving "high pressure" in-line fluorination processes, the exposure time is usually from about 30 s to 180 s.

The oxidized surface fluorinated plastics material is usually exposed to the antioxidant(s) at a temperature of from about 0°C to about the softening temperature of the plastics material, e.g. within the self-sustaining temperature range of the plastics material. In embodiments involving "low pressure" off-line fluorination processes, the exposure temperature is preferably from about 20°C to about 70°C, e.g. about 40°C. In embodiments involving "high pressure" in-line fluorination processes, the exposure temperature is preferably from about 60°C to about 150°C, e.g. about 90°C.

The present invention has application in the treatment of any suitable plastics material. Suitable plastics materials include polyolefins such as polyethylene, polypropylene, polybutadiene and derivatives and mixtures thereof. Preferred plastics materials include polypropylene and polyethylene. The process may also be applied to the treatment of plastics materials of various densities. Thus, high density polyolefins and low density polyolefins may be treated. In addition, the present invention has particular application to the treatment of porous plastic materials. The term "porous" includes microporous (i.e. having pores with a diameter of less than about 50 nm), macroporous (i.e. having pores with a diameter of greater than about 50 nm) and mesoporous.

The process produces a surface fluorinated plastics material in which embrittlement has been inhibited. By "inhibited", the Inventors mean that embrittlement has been reduced to no more than a *de minimis* level, which is usually considered to be the level above which embrittlement would adversely affect the performance of the plastics material.

The embrittlement inhibited plastics material has many applications. For example, plastics membranes may be used in industry (e.g. in industrial filters) or in medicine (e.g. in haemodialysis machines or blood oxygenation machines).

A further advantage of preferred embodiments of the present invention is that the solvent barrier performance of the plastics materials treated with the antioxidant(s) is improved over that for surface fluorinated plastics materials which have not been treated using the antioxidant(s). Thus, embrittlement inhibited plastics containers may be used to carry fuel.

A preferred embodiment of the present invention is substantially as herein described with reference to the accompanying examples.

The following is a description of examples of the present invention. These examples are not intended to limit the scope of protection provided for the invention by the claims.

### EXAMPLE 1 - Comparative

An elastic and mechanically stable, macroporous polypropylene filter membrane (having a thickness of about 160 microns (µm) and with an average pore diameter of 0.87 microns (µm)) was treated with a fluorinating gas consisting of 0.5 vol. % fluorine in 99.5 vol. % at a temperature of about 23°C for about 3 min.

The fluorinated membrane was extremely brittle and disintegrated when touched. The fluorinated membrane was entirely unsuitable for use as a filter membrane.

### EXAMPLE 2

An elastic and mechanically stable, macroporous polypropylene filter membrane (having a thickness of about 160 microns (µm) and with an average pore diameter of 0.87 microns (µm)) was treated with a fluorinating gas consisting of 0.5 vol. % fluorine in 99.5 vol. % at a temperature of about 23°C for about 3 min as in Example 1.

After removal of the fluorinating gas, the membrane was exposed to ambient air for about 4 min at ambient pressure and subsequently treated in the absence of air for about 15 min with nitric oxide gas at a NO partial pressure of about 200 mbar (about 20 kPa).

The fluorinated membrane was mechanically stable and not brittle. The fluorinated membrane was suitable for use as a filter membrane.

### EXAMPLE 3 - Comparative

An elastic and mechanically stable, porous polypropylene filter membrane (having a thickness of about 92 microns (µm) and with an average pore diameter of 0.36 microns) was treated with a fluorinating gas consisting of 0.5 vol. % fluorine in 99.5 vol. % at a temperature of about 23°C for about 3 min.

The fluorinated membrane was brittle and had, in particular, a very low tensile strength. The fluorinated membrane was entirely unsuitable for use as a filter membrane.

### EXAMPLE 4

An elastic and mechanically stable, porous polypropylene filter membrane (having a thickness of about 92 microns (µm) and with an average pore diameter of 0.36 microns) was treated with a fluorinating gas consisting of 0.5 vol. % fluorine in 99.5 vol. % at a temperature of about 23°C for about 3 min as in Example 3.

After removal of the fluorinating gas, the membrane was exposed, in the absence of air, to nitric oxide gas at a NO partial pressure of about 200 mbar (about 20 kPa) for about 6 min.

The fluorinated membrane was not brittle and had the same tensile strength as the original polypropylene filter membrane prior to fluorination. The fluorinated membrane was suitable for use as a filter membrane.

Advantages of preferred embodiments of the present invention include:
- Embrittlement of plastics materials is inhibited;
- Reduced permeability (e.g. improved barrier performance) of plastics materials to organic solvent, especially hydrocarbon vehicle fuel comprising oxygenated components such as methanol;
- Reduced wettability of surface fluorinated plastics membranes to organic solvent, particularly to hydrophobic organic liquids having hydrophilic components;
- Reduced extent to which fluorinated barrier layer deteriorates due to oxidative degeneration;
- Elimination of a need to monitor and carefully control oxygen contaminant levels - resulting in increased efficiency and a reduction of capital and operating costs; and
- Exposing a surface-fluorinated plastics material or a surface-fluorinated plastics material derived therefrom to a reactive fluid comprising at least one stabilizer can be integrated with existing industrial surface fluorination processes without substantial modification of existing equipment or protocols.

It will be appreciated that the invention is not restricted to the details described above with reference to the preferred embodiments but that numerous modifications and variations can be made without departing from the scope of the invention as defined by the following claims.

## Claims

1. Use of at least one antioxidant selected from the group consisting of NOₓ; SOₓ; nitric oxide (NO); dinitrogen dioxide (N₂O₂); nitrogen dioxide (NO₂); dinitrogen trioxide (N₂O₃) ; dinitrogen tetroxide (N₂O₄); sulfur dioxide (SO₂); and sulfur trioxide (SO₃), as an embrittlement inhibitor for surface fluorinated plastics materials.

2. Use as claimed in Claim 1 wherein the antioxidant comprises NO.

3. Use as claimed in Claim 1 or Claim 2 wherein the or each antioxidant is used in a process comprising:
surface fluorinating at least a portion of the surface of a plastics material to produce a surface fluorinated plastics material;
exposing said surface fluorinated plastics material to an oxidant fluid to produce an oxidised surface fluorinated plastics material; and
exposing said oxidised surface fluorinated plastics material to the or each antioxidant.

4. Use as claimed in Claim 3 wherein said plastics material is exposed to a gaseous fluid mixture comprising molecular fluorine and an oxidant gas to produce said oxidized surface fluorinated plastics material.

5. Use as claimed in Claim 3 wherein said plastics material is exposed to a gaseous fluid comprising molecular fluorine in an inert carrier gas to produce said surface fluorinated plastics material which is subsequently exposed to an oxidant gas to produce said oxidised surface fluorinated plastics material.

6. Use as claimed in any of Claims 3 to 5 wherein said oxidised surface fluorinated plastics material is exposed to NO gas.

7. Use as claimed in any of Claims 3 to 6 wherein said oxidised surface fluorinated plastics material is exposed to a gaseous fluid comprising the antioxidant(s) at a partial pressure of from about 5 kPa to about 1 MPa.

8. Use as claimed in any of Claims 3 to 7 wherein said oxidised surface fluorinated plastics material is exposed to a gaseous fluid comprising the antioxidant(s) for a period of from about 30 s to about 60 min.

9. Use as claimed in any of the preceding claims wherein the plastics material is selected from polypropylene and polyethylene.

10. Use as claimed in any of the preceding claims wherein the plastics material is porous.

11. Use as claimed in any of the preceding claims wherein an embrittlement inhibited surface fluorinated plastics material is in the form of a filter membrane.

12. A process for producing embrittlement inhibited surface fluorinated plastics materials, said process comprising:
surface fluorinating at least a portion of the surface of a plastics material to produce a surface fluorinated plastics material;
exposing said surface fluorinated plastics material to an oxidant fluid to produce an oxidised surface fluorinated plastics material; and
exposing said oxidised surface fluorinated plastics material to at least one antioxidant selected from the group consisting of NOₓ; SOₓ; nitric oxide (NO); dinitrogen dioxide (N₂O₂); nitrogen dioxide (NO₂); dinitrogen trioxide (N₂O₃) ; dinitrogen tetroxide (N₂O₄) ; sulfur dioxide (SO₂); and sulfur trioxide (SO₃).

13. A process as claimed in Claim 12 wherein the antioxidant comprises NO.

## Patentansprüche

1. Verwendung von zumindest einem Antioxidans, ausgewählt aus der Gruppe, bestehend aus NOₓ, SOₓ, Stickoxid (NO), Distickstoffdioxid (N₂O₂), Stickstoffdioxid (NO₂), Distickstofftrioxid (N₂O₃), Distickstofftetroxid (N₂O₄), Schwefeldioxid (SO₂) und Schwefeltrioxid (SO₃), als Versprödungsinhibitor für Kunststoffmaterialien mit fluorierter Oberfläche.

2. Verwendung nach Anspruch 1, wobei das Antioxidans NO umfaßt.

3. Verwendung nach Anspruch 1 oder 2, wobei das oder jedes Antioxidans bei einem Verfahren verwendet wird, das folgendes aufweist:
Oberflächenfluorieren von zumindest einem Teil der Oberfläche eines Kunststoffmaterials, so daß ein Kunststoffmaterial mit fluorierter Oberfläche erzeugt wird;
Aussetzen des Kunststoffmaterials mit fluorierter Oberfläche einem Oxidationsmittelfluid, so daß ein oxidiertes oberflächenfluoriertes Kunststoffmaterial erzeugt wird; und
Aussetzen dieses oxidierten oberflächenfluorierten Kunststoffmaterials dem oder jedem Antioxidationsmittel.

4. Verwendung nach Anspruch 3, wobei das Kunststoffmaterial einem gasförmigen Fluidgemisch ausgesetzt wird, das molekulares Fluor und gasförmiges Oxidationsmittel umfaßt, so daß das oxidierte oberflächenfluorierte Kunststoffmaterial erzeugt wird.

5. Verwendung nach Anspruch 3, wobei das Kunststoffmaterial einem gasförmigen Fluid ausgesetzt wird, das molekulares Fluor in einem inerten Trägergas umfaßt, so daß das Kunststoffmaterial mit fluorierter Oberfläche erzeugt wird, das anschließend einem gasförmigen Oxidationsmittel ausgesetzt wird, so daß das oxidierte oberflächenfluorierte Kunststoffmaterial erzeugt wird.

6. Verwendung nach einem der Ansprüche 3 bis 5, wobei das oxidierte oberflächenfluorierte Kunststoffmaterial NO-Gas ausgesetzt wird.

7. Verwendung nach einem der Ansprüche 3 bis 6, wobei das oxidierte oberflächenfluorierte Kunststoffmaterial einem gasförmigen Fluid ausgesetzt wird, das das (die) Oxidationsmittel mit einem Partialdruck von etwa 5 kPa bis etwa 1 MPa umfaßt.

8. Verwendung nach einem der Ansprüche 3 bis 7, wobei das oxidierte oberflächenfluorierte Kunststoffmaterial für einen Zeitraum von etwa 30 s bis etwa 60 min einem gasförmigen Fluid ausgesetzt wird, das das (die) Oxidationsmittel umfaßt.

9. Verwendung nach einem der vorstehenden Ansprüche, wobei das Kunststoffmaterial aus Polypropylen und Polyethylen ausgewählt ist.

10. Verwendung nach einem der vorstehenden Ansprüche, wobei das Kunststoffmaterial porös ist.

11. Verwendung nach einem der vorstehenden Ansprüche, wobei das oberflächenfluorierte Kunststoffmaterial mit gehemmter Versprödung in Form einer Filtermembran vorliegt.

12. Verfahren zum Herstellen von oberflächenfluorierten Kunststoffmaterialien mit gehemmter Versprödung, wobei das Verfahren folgendes aufweist:
Oberflächenfluorieren von zumindest einem Teil der Oberfläche eines Kunststoffmaterials, so daß ein Kunststoffmaterial mit fluorierter Oberfläche erzeugt wird;
Aussetzen des Kunststoffmaterials mit fluorierter Oberfläche einem Oxidationsmittelfluid, so daß ein oxidiertes oberflächenfluoriertes Kunststoffmaterial erzeugt wird; und
Aussetzen dieses oxidierten oberflächenfluorierten Kunststoffmaterials dem zumindest einen Antioxidans, das aus der Gruppe ausgewählt ist, bestehend aus NOₓ, SOₓ, Stickoxid (NO), Distickstoffdioxid (N₂O₂), Stickstoffdioxid (NO₂), Distickstofftrioxid (N₂O₃), Distickstofftetroxid (N₂O₄), Schwefeldioxid (SO₂) und Schwefeltrioxid (SO₃).

13. Verfahren nach Anspruch 12, wobei das Antioxidans NO umfaßt.

## Revendications

1. Utilisation d'au moins un antioxydant choisi dans le groupe constitué par NOₓ; SOₓ; l'oxyde nitrique (NO); le dioxyde de diazote (N₂O₂), le dioxyde d'azote (NO₂); le trioxyde de diazote (N₂O₃); le tétraoxyde de diazote (N₂O₄); le dioxyde de soufre (SO₂); et le trioxyde de soufre (SO₃), comme inhibiteur de fragilisation pour des matières plastiques fluorées en surface.

2. Utilisation selon la revendication 1, dans laquelle l'antioxydant comprend le NO.

3. Utilisation selon la revendication 1 ou la revendication 2, dans laquelle l'antioxydant ou chaque antioxydant est utilisé dans un procédé comprenant:
la fluoration en surface d'au moins une portion de la surface d'une matière plastique pour produire une matière plastique fluorée en surface;
l'exposition de ladite matière plastique fluorée en surface à un fluide oxydant pour produire une matière plastique fluorée en surface oxydée; et
l'exposition de ladite matière plastique fluorée en surface oxydée à l'antioxydant ou à chaque antioxydant.

4. Utilisation selon la revendication 3, dans laquelle on expose ladite matière plastique à un mélange de fluides gazeux comprenant du fluor moléculaire et un gaz oxydant pour produire ladite matière plastique fluorée en surface oxydée.

5. Utilisation selon la revendication 3, dans laquelle on expose ladite matière plastique à un fluide gazeux comprenant du fluor moléculaire dans un gaz porteur inerte pour produire ladite matière plastique fluorée en surface, que l'on expose ensuite à un gaz oxydant pour produire ladite matière plastique fluorée en surface oxydée.

6. Utilisation selon l'une quelconque des revendications 3 à 5, dans laquelle on expose ladite matière plastique fluorée en surface oxydée à du NO gazeux.

7. Utilisation selon l'une quelconque des revendications 3 à 6, dans laquelle on expose ladite matière plastique fluorée en surface oxydée à un fluide gazeux comprenant l'antioxydant ou les antioxydants sous une pression partielle d'environ 5 kPa à environ 1 MPa.

8. Utilisation selon l'une quelconque des revendications 3 à 7, dans laquelle on expose ladite matière plastique fluorée en surface oxydée à un fluide gazeux comprenant l'antioxydant ou les antioxydants pendant une période d'environ 30 secondes à environ 60 minutes.

9. Utilisation selon l'une quelconque des revendications précédentes, dans laquelle la matière plastique est choisie parmi un polypropylène et un polyéthylène.

10. Utilisation selon l'une quelconque des revendications précédentes, dans laquelle la matière plastique est poreuse.

11. Utilisation selon l'une quelconque des revendications précédentes, dans laquelle la matière plastique fluorée en surface traitée contre la fragilisation est sous forme d'une membrane filtrante.

12. Procédé de production de matières plastiques fluorées en surface traitée contre la fragilisation, ledit procédé comprenant:
la fluoration en surface d'au moins une portion de la surface d'une matière plastique pour produire une matière plastique fluorée en surface;
l'exposition de ladite matière plastique fluorée en surface à un fluide oxydant pour produire une matière plastique fluorée en surface oxydée; et
l'exposition de ladite matière plastique fluorée en surface oxydée à au moins un antioxydant choisi dans le groupe constitué par NOₓ; SOₓ; l'oxyde nitrique (NO); le dioxyde de diazote (N₂O₂), le dioxyde d'azote (NO₂); le trioxyde de diazote (N₂O₃); le tétraoxyde de diazote (N₂O₄); le dioxyde de soufre (SO₂); et le trioxyde de soufre (SO₃).

13. Procédé selon la revendication 12, dans lequel l'antioxydant comprend le NO.
